# EUROPÄISCHE PATENTANMELDUNG

(11) **EP 4 647 985 A1**
(43) Veröffentlichungstag der Anmeldung: **12.11.2025**
(21) Anmeldenummer: 24174399.6
(22) Anmeldetag: 06.05.2024
(51) Int. Cl.: G06Q 10/087, B65B 3/00

(54) **VERFAHREN ZUM BEFÜLLEN EINES MEDIKAMENTENBEHÄLTERS SOWIE VERFAHREN ZUM BEREITSTELLEN EINES VERKAUFSFERTIGEN, MIT EINEM WIRKSTOFF BEFÜLLTEN MEDIKAMENTENBEHÄLTERS**

(71) Anmelder: Inductio AG, 6052 Hergiswil (CH)
(72) Erfinder: KOLLER, Horst, 8730 Uznach (CH)
(74) Vertreter: Tergau & Walkenhorst Intellectual Property GmbH

(57) **Zusammenfassung**

Verfahren zum Befüllen eines Medikamentenbehälters (1) mit einem Wirkstoff soll eine Vereinfachung und Verbesserung der Logistikkette insgesamt in besonderem Maße begünstigen. Dazu wird erfindungsgemäß die in den Medikamentenbehälter (1) abzufüllende Wirkstoffmenge abhängig von einem in einem zugeordneten Anforderungs-Datensatz hinterlegten Kennwert eingestellt, wobei vor, während oder nach der Abfüllung ein dem Medikamentenbehälter (1) individuell zugeordneter Signatur-Kennwert mit dem Anforderungs-Datensatz verknüpft wird.

## Beschreibung

Die Erfindung betrifft ein Verfahren zum Befüllen eines Medikamentenbehälters mit einem Wirkstoff sowie ein Verfahren zum Bereitstellen eines verkaufsfertigen, mit einem Wirkstoff befüllten Medikamentenbehälters.

Medikamente oder Arzneimittel, wie beispielsweise auch Impfstoffe, werden üblicherweise in Wirkstoff- oder Medikamentenbehältern, auch als Container oder Phiole bezeichnet, bereitgestellt. Ein solcher Medikamentenbehälter ist üblicherweise in der Art eines Fläschchens ausgestaltet und umfasst einen Innenraum, in dem das Medikament oder der Wirkstoff vorgehalten wird und der über eine in der Art einer Flaschenmündung ausgestaltete Behälteröffnung zugänglich ist. Von einem solchen Behälter oder Container aus wird der Wirkstoff dann über geeignete Transfersysteme für die eigentliche Verabreichung an geeignete Systeme wie beispielsweise eine Spritze oder eine intravenöse Leitung, die einen Flüssigkeitszugang zum Kreislauf des Patienten bereitstellt, übergeben.

Die Befüllung derartiger Medikamentenbehälter mit Wirkstoff erfolgt üblicherweise automatisiert in geeignet ausgelegten Befüllanlagen, in denen eine Vielzahl von Medikamentenbehältern gleichzeitig bearbeitet und befüllt werden kann. Dabei werden die Medikamentenbehälter chargenweise mit einer Anzahl von beispielsweise 100 Stück pro Charge zusammengefasst und gemeinsam befüllt (so genanntes "Nesting"). Dementsprechend sollten die Medikamentenbehälter für eine derartige automatisierte Handhabung auch in hohen Stückzahlen geeignet ausgelegt sein; dieser Aspekt ist besonders für Wirkstoffe bedeutsam, die in kurzer Zeit in großen Mengen bereitgestellt werden sollen, wie beispielsweise Impfstoffe.

Aus verschiedenen Gründen, beispielsweise wegen besonders hochwertiger oder ggf. auch toxischer oder auf sonstige Weise schädlicher Wirkstoffe, kann es zudem wünschenswert oder sogar notwendig sein, sowohl bei der Befüllung als auch bei der späteren Handhabung, Lagerung und Wirkstoffentnahme unbeabsichtigte Wirkstoffverluste möglichst gering zu halten oder ganz zu vermeiden. Zusätzlich kann es darüber hinaus gerade auch bei der Handhabung solcher Wirkstoffe wünschenswert sein, die Logistikkette für die Verarbeitung und Bereitstellung solcher Wirkstoffe zu verbessern, um eine bedarfsgerechte und zielgenaue Versorgung zu ermöglichen.

Der Erfindung liegt daher die Aufgabe zugrunde, ein Verfahren zum Befüllen eines Medikamentenbehälters mit einem Wirkstoff anzugeben, das eine Vereinfachung und Verbesserung der Logistikkette insgesamt in besonderem Maße begünstigt. Des Weiteren soll ein Verfahren zum Bereitstellen eines verkaufsfertigen, mit einem Wirkstoff befüllten Medikamentenbehälter angegeben werden, das ebenfalls eine Vereinfachung und Verbesserung der Logistikkette insgesamt in besonderem Maße begünstigt.

Bezüglich des Verfahrens zum Befüllen eines Medikamentenbehälters mit einem Wirkstoff wird diese Aufgabe erfindungsgemäß gelöst, indem die in den Medikamentenbehälter abzufüllende Wirkstoffmenge abhängig von einem in einem zugeordneten Anforderungs-Datensatz hinterlegten Kennwert eingestellt wird, wobei vor, während oder nach der Abfüllung ein dem Medikamentenbehälter individuell zugeordneter Signatur-Kennwert mit dem Anforderungs-Datensatz verknüpft wird.

Die Erfindung geht dabei von der Überlegung aus, dass eine ganz besonders bedeutsame Verbesserung beim Umgang gerade mit hochwertigen, toxischen oder auf sonstige Weise problematischen Medikamenten oder Wirkstoffen eine Überproduktion, bei der am Ende nicht verbrauchter oder überschüssiger Wirkstoff verworfen oder entsorgt werden müsste, reduziert oder möglichst vollständig vermieden werden sollte. Unter Abkehr von den üblichen Abfüll- und Verarbeitungsverfahren schlägt die Erfindung daher vor, von der üblichen "standardisierten" Vorgehensweise abzuweichen, bei der die Medikamentenbehälter mit einheitlichen bemessenen oder vorgegebenen Inhaltsmengen befüllt werden, oder mit anderen Worten bei dem eine gesamte hergestellte Wirkstoff-Charge mit der gleichen Wirkstofffüllmenge abgefüllt wird. Gerade solche einheitlichen Füllmengen führen nämlich in der Regel dazu, dass die abgefüllte Dosis oder Füllstoffmenge nicht genau zum aktuellen Bedarf, beispielsweise bei der Behandlung eines Patienten, passt und demzufolge nahezu zwingend nach der Behandlung oder Verabreichung ungenutzte Restmengen der Wirkstoffe in den Behältern verbleiben.

Im Folgenden werden weitere Aspekte der vorliegenden Erfindung anhand der Bezugnahme auf "Medikamentenbehälter" oder "Wirkstoffbehälter" erläutert. Unter "Medikamentenbehälter" oder "Wirkstoffbehälter" sind dabei alle Behältnisse zu verstehen, in denen Medikamente oder Wirkstoffe abgefüllt und/oder vorgehalten werden; insbesondere kann es sich dabei um "Medikamentenbehälter" oder "Wirkstoffbehälter" im "klassischen Sinne", also beispielsweise um Fläschchen oder so genannte "Vials", handeln, oder auch um vorbefüllte Spritzen. Diese Aspekte werden als eigenständig erfinderisch angesehen.

Um das vorstehend beschriebene Problem zu überwinden, schlägt die Erfindung in einem Aspekt das Konzept einer "patientenindividualisierten Abfüllung" bzw. einer "situationsspezifischen Abfüllung" vor, bei dem von einer externen Quelle, beispielsweise dem behandelnden Arzt oder einem Krankenhaus, eine für die individuelle Behandlung des Patienten aktuell vorgesehene Dosis eines bestimmten Medikaments oder Wirkstoffs vorgegeben und in einem Anforderungs-Datensatz hinterlegt werden kann. Dieser kann sodann, beispielsweise über das Internet, an die Abfüllstation übermittelt werden. Dort kann die Abfüllung einer individuell für diesen Patienten oder den jeweiligen Behandlungsschritt vorgesehenen Medikamenten- oder Wirkstoffmenge anhand der Anforderung individualisiert durchgeführt werden. Um dies zu ermöglichen, ist gemäß einem Aspekt der Erfindung die Ausrüstung des Medikamentenbehälters mit einer individuellen Kennung vorgesehen, die die Bereitstellung eines dem jeweiligen Behälter individuell zugeordneten Signatur-Kennwerts erlaubt.

Nach der Abfüllung kann der individuell und bedarfsgerecht befüllte Behälter an den Besteller, beispielsweise den Behandler, übermittelt werden, wobei der zugeordnete Signatur-Kennwert jederzeit ein Tracking oder eine Nachverfolgung des jeweiligen Behälters bis hin zum Bestimmungsort, und ggf. jederzeit eine Verifikation, ob es sich um den richtigen Behälter handelt, erlaubt. Dabei können gemäß einem Aspekt der Erfindung auch für die Erfüllung von vorgegebenen Produktions- oder Handhabungsstandards, beispielsweise im Rahmen des GMP, notwendige oder vorteilhafte Aspekte berücksichtigt sein, wie beispielsweise die Chargendefinition, die Überprüfung und Nachverfolgung, dass die richtige Füllmenge in das richtige Behältnis abgefüllt wurde, etc.

Gemäß einem Aspekt der Erfindung kann dabei der dem mit dem jeweiligen Behälter individuell zugeordneten Signatur-Kennwert verknüpfte Anforderungs-Datensatz parallel, beispielsweise über das Internet, eine anderweitige elektronische Kommunikation oder auf sonstige Weise, an den vorgesehenen Empfänger, beispielsweise den Behandler, übermittelt werden, so dass dieser jederzeit die Zuordnung des empfangenen Behälters und insbesondere von dessen Inhalt mit dem vorgesehenen Einsatz vornehmen oder überprüfen kann.

Die individuelle Kennzeichnung des Behälters kann dabei mit beliebigen geeigneten Methoden vorgenommen werden, wobei gemäß einem bevorzugten Aspekt der Erfindung eine für eine digitale Bearbeitung geeignete Kennzeichnungsmethode vorgesehen sein sollte. Beispielsweise könnte es sich bei einer solchen Kennzeichnung um ein geeignetes Barcode-Muster handeln. In besonders bevorzugter und als eigenständig erfinderisch angesehener Ausgestaltung ist für die Kennzeichnung aber die Verwendung eines RFID-Chips vorgesehen, wobei der dem RFID-Chip des hierfür verwendeten Behälters zugeordnete Signatur-Kennwert erfasst und auf geeignete Weise mit dem Anforderungs-Datensatz verknüpft werden kann.

Gemäß einem Aspekt der Erfindung ist somit als Informationselement oder zu Zwecken der Kennzeichnung ein RFID-Transponder, auch als "RFID-Tag" oder "Funketikett" bezeichnet, vorgesehen; es kann sich auch um ein so genanntes "RFID Label" handeln. Ein solcher RFID-Transponder ist per Funk und somit kontaktlos auslesbar, was die Handhabung und Logistik gerade bei abgefüllten Wirkstoffen oder Arzneimitteln und den damit einhergehenden möglicherweise enormen Stückzahlen enorm erleichtert. Ein RFID-System besteht nämlich in der Regel aus einem derartigen RFID-Transponder, der sich am oder im jeweiligen Gegenstand befindet und einen kennzeichnenden Code und ggf. weitere Informationen enthält, sowie einem Lesegerät zum Beschreiben und Auslesen dieser Kennung. Ein durch eine solche Auslesung erhältlicher, dem RFID-Chip individuell zugeordneter Signatur-Kennwert, der insbesondere auch digital verarbeitet werden kann, ermöglicht dabei einen Rückschluss auf den individuellen Behälter oder Container, selbst wenn dieser im Rahmen einer Massenproduktion gemeinsam mit vielen weiteren Behältern produziert oder befüllt wird. RFID-Transponder können sehr klein in ihren Abmessungen sein und dementsprechend in das Primärpackmittel und gemäß einem als eigenständig erfinderisch angesehenen Aspekt im Sinne einer besonders vereinfachten und auch für große Stückzahlen geeigneten Bauweise in den Verschlussdeckel für den Medikamentenbehälter integriert werden. Darüber hinaus besteht die Möglichkeit, RFID-Transponder über ein spezielles Druckverfahren stabiler Schaltungen aus Polymeren herzustellen.

Mittels der auf dem RFID-Chip oder -Transponder gespeicherten Daten soll insbesondere eine nachvollziehbare und manipulationssichere Nachverfolgung des jeweiligen Produkts ermöglicht werden. Dementsprechend können diesbezügliche, für das im jeweiligen Behälter befindliche Produkt oder den Wirkstoff charakteristische Informationen auf dem Chip oder Transponder hinterlegt sein. Alternativ oder insbesondere zusätzlich kann gemäß einem Aspekt der Erfindung aber auch vorgesehen sein, mittels der hinterlegten Daten den einzelnen Medikamentenbehälter eindeutig identifizieren zu können. Dazu könnte beispielsweise eine Chargennummer oder dergleichen, vorzugsweise in Kombination mit einer Materialnummer, und/oder ggf. eine individuelle Packungsnummer zur Identifikation hinterlegt sein. Bevorzugt und gemäß einem Aspekt der Erfindung ist daher zusätzlich oder alternativ zu einer solchen Chargen-nummer eine individuelle, für den einzelnen Medikamentenbehälter charakteristische Kennung hinterlegt.

In vorteilhafter Ausgestaltung umfasst der RFID-Transponder einen RFID-Chip und eine mit diesem verbundene RFID-Antenne.

Als eigenständig erfinderisch angesehen wird somit auch die Verwendung eines fest einem Medikamentenbehälter zugeordneten RFID-Chips, um einen individuell anhand von Therapie- oder patientenspezifischen Vorgaben befüllten Medikamentenbehälter jederzeit identifizieren und seinem bestimmungsgemäßen Einsatz zuführen zu können.

Durch die genannten Aspekte werden für die Logistik bei der Versorgung mit Medikamenten oder Wirkstoffen völlig neuartige Möglichkeiten eröffnet, wobei insbesondere durch die patientenindividuelle Dosierung die Herstellung überflüssiger Wirkstoffmengen, die nach der Verabreichung der eigentlich erforderlichen Menge verworfen und entsorgt werden müssten, weitgehend minimiert werden kann. Damit sind gerade bei sehr teuren, toxischen oder anderweitig sensiblen Wirkstoffen enorme Effizienzvorteile erreichbar.

Bezüglich des Verfahrens zum Bereitstellen eines verkaufsfertigen, mit einem Wirkstoff befüllten Medikamentenbehälters wird die genannte Aufgabe in als eigenständig erfinderisch angesehener Weise gelöst, indem bei der Befüllung des Medikamentenbehälters ein diesem zugeordneter Kennzeichnungs-Datensatz erstellt wird, in dem ein dem Behälter individuell zugeordneter Signatur-Kennwert mit für die Befüllung des Medikamentenbehälters charakteristischen Kenndaten verknüpft ist, wobei der Medikamentenbehälter nach seiner Befüllung zunächst zu einer Konfektionierstation transportiert und erst dort anhand des dem Behälter individuell zugeordneten Signatur-Kennwerts und der mit diesem verknüpften, für die Befüllung des Medikamentenbehälters charakteristischen Kenndaten mit einer Etikettierung und/oder einer Umverpackung versehen wird.

Dieser als eigenständig erfinderisch angesehene Aspekt umfasst somit das Konzept einer "lokalen Etikettierung" oder "Vor-Ort-Etikettierung", alternativ auch als "local labelling and packaging" bezeichnet, bei dem an einem zentralen Ort, insbesondere auch in einem so genannten Hoch-Preis-Land, die zentrale Herstellung des Wirkstoffs oder Medikaments in großen Mengen ("bulk Herstellung") sowie die zentrale Abfüllung in individualisierte Behälter oder Container sowie deren zentrale Lagerung einer Vielzahl solcher abgefüllter Behälter ("bulk storage") erfolgen kann. Von dort aus können dann auch große Mengen solcher befüllten Behälter zu einer Konfektionierungs- oder Weiterverarbeitungsstation transportiert werden, die bei einer globalisierten Infrastruktur insbesondere in anderen Ländern, beispielsweise den Anwenderländern, vorgesehen sein können. Erst dort kann dann die Anbringung der Labels oder Etiketten, insbesondere in Erfüllung eventueller nationaler Vorgaben und Kennzeichnungspflichten, vorgesehen sein, wobei eine ordnungsgemäße und korrekte Inhaltsangabe des jeweils etikettierten Behälters anhand des dem Behälter individuell zugeordneten Signatur-Kennwerts und der mit diesem verknüpften, für die Befüllung des Medikamentenbehälters charakteristischen Kenndaten vorgesehen sein kann.

In einer weiteren, als eigenständig erfinderisch angesehen Ausgestaltung kann das beschriebene Konzept der individualisierten Abfüllung alternativ oder zusätzlich zu einer kommerziellen Produktion von approbierten Medikamenten auch für die Versorgung von Klinikmustern, beispielswese im Rahmen von Studien oder dergleichen, angewendet werden. Bei klinischen Studien werden nämlich üblicherweise verblindete Muster an die klinischen Forschungsinstitute ("CROs") geschickt, so dass Placebo- und Aktivprodukte für den Anwender nicht erkennbar sind. Hierzu könnte der individuell abgefüllte und auch gekennzeichnete Behälter eine große Hilfe sein, um bei der späteren Analyse Verwechslungen zu vermeiden, und/oder um zu tracken oder nachzuverfolgen, welcher Patient welches Produkt (placebo oder aktiv) bekommen hat, ohne dass der Anwender davon weiß. Dies kann die Sicherheit und Zuverlässigkeit bei klinischen Studien bedeutend erhöhen.

In vorteilhafter Weiterbildung umfassen die Kenndaten dabei die für die genannten Zwecke förderlichen oder erforderlichen Angaben wie beispielsweise Inhaltsstoff, Füllmenge, Abfülldatum, Chargennummer, Hersteller, Abfüller und dergleichen. Die entsprechenden Datensätze können dabei, beispielsweise über das Internet, an die Konfektionierungs- oder Weiterverarbeitungsstation übermittelt werden.

Gemäß einem Aspekt der Erfindung kann dabei der dem mit dem Behälter individuell zugeordneten Signatur-Kennwert verknüpfte Kenndatensatz parallel, beispielsweise über das Internet, eine anderweitige elektronische Kommunikation oder auf sonstige Weise, an den vorgesehenen Empfänger, beispielsweise den Etikettierer, übermittelt werden, so dass dieser jederzeit die Zuordnung des empfangenen Behälters und insbesondere von dessen Inhalt mit dem vorgesehenen Einsatz vornehmen oder überprüfen kann.

Als eigenständig erfinderisch angesehen wird somit auch die Verwendung einer fest einem Medikamentenbehälter zugeordneten Kennzeichnung, um einen befüllten Medikamentenbehälter jederzeit identifizieren und erst lokal und vor Ort an seinem vorgesehenen Einsatzort oder seiner vorgesehenen Einsatzregion korrekt und ordnungsgemäß etikettieren zu können.

Auch in dieser Ausführungsform kann die individuelle Kennzeichnung des Behälters mit beliebigen geeigneten Methoden vorgenommen werden, wobei gemäß einem bevorzugten Aspekt der Erfindung eine für eine digitale Bearbeitung geeignete Kennzeichnungsmethode vorgesehen sein sollte. Beispielsweise könnte es sich bei einer solchen Kennzeichnung um ein geeignetes Barcode-Muster handeln. In besonders bevorzugter und als eigenständig erfinderisch angesehener Ausgestaltung ist für die Kennzeichnung aber auch in diesem Fall die Verwendung eines RFID-Chips vorgesehen, wobei der dem RFID-Chip des hierfür verwendeten Behälters zugeordnete Signatur-Kennwert erfasst und auf geeignete Weise mit den Kenndaten verknüpft werden kann.

Durch die genannten Aspekte werden für die Logistik bei der Versorgung mit Medikamenten oder Wirkstoffen völlig neuartige Möglichkeiten eröffnet, wobei insbesondere durch die zentrale Lagerung von großen Mengen befüllter Behälter und die erst nach dem Versand in die geplante Einsatzregion vorgesehene Etikettierung für die Logistikkette enorme Effizienzvorteile erreichbar sind.

Ein Ausführungsbeispiel der Erfindung wird anhand einer Zeichnung näher erläutert. Darin zeigen:
- Fig. 1: einen mit einem Verschlusssystem verschlossenen Medikamentenbehälter, und
- Fig. 2: schematisch ein Befüllungssystem zur Befüllung des mit dem Verschlusssystem vormontierten Medikamentenbehälters nach Fig. 1 mit einem Wirkstoff.

Gleiche Teile sind in allen Figuren mit denselben Bezugszeichen versehen.

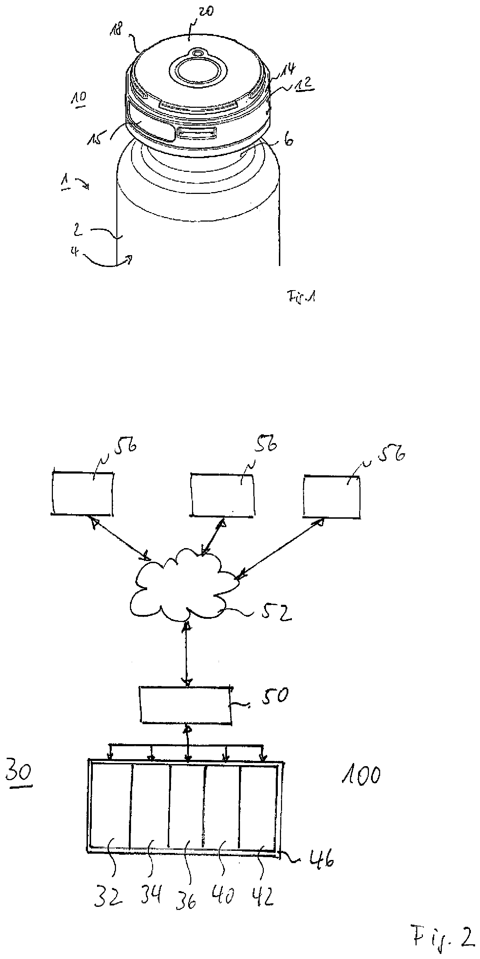

Der Medikamentenbehälter 1 gem. Fig. 1, auch als Container oder Phiole bezeichnet, ist in der Art eines Fläschchens ausgestaltet. Er umfasst einen von einer Behälterwand 2 umschlossenen Innenraum 4, in dem das Medikament oder der Wirkstoff vorgehalten wird. Die Behälterwand 2 ist im Ausführungsbeispiel aus einem geeignet gewählten Kunststoff mit oder ohne Barriereschicht gefertigt. Besonders bevorzugt ist hierbei ein "medical grade" Kunststoff vorgesehen wie beispielsweise COP-Varianten 690R^{®}, 790R^{®}, COC Varianten Topas^{®} 8007S-04, 6013S-04, 6015S-04. Ganz besonders bevorzugt ist der Kunststoff dabei im Hinblick auf die Kriterien transparent, bruchunempfindlich, geringe bis keine Wechselwirkung mit dem vorgesehenen Medikament, medical grade, insbesondere verwendbar als Glasersatz, einzeln oder in Kombination miteinander, geeignet ausgewählt. Der Innenraum 4 ist über eine in der Art einer Flaschenmündung ausgestaltete Behälteröffnung 6 zugänglich. Alternativ könnte anstelle des wie beschrieben ausgeführten Medikamentenbehälters 1 auch ein zur Bereitstellung einer vorbefüllten Spritze vorgesehener Spritzenkörper vorgesehen sein.

Der Medikamentenbehälter 1 ist in besonderem Maße für eine automatisierte Befüllung mit Wirkstoff unter aseptischen oder sterilen Bedingungen geeignet ausgelegt. Dabei sollen insbesondere die Komponenten des Medikamentenbehälters nach ihrer Herstellung vollständig oder bedarfsgerecht sterilisiert und anschließend unter sterilen Bedingungen weiterbehandelt, gelagert oder auf sonstige Weise einer Benutzung zugeführt werden, ohne dass nachträglich eine erneute vollständige Sterilisierung erforderlich werden soll. Als Schwachpunkt wird diesbezüglich vorliegend insbesondere die Befüllung des Behälters mit Wirkstoff angesehen, da hierzu der Behälterinnenraum 4 zugänglich gemacht werden muss und somit ein Eintrag von Verunreinigungen oder Kontaminationen denkbar wäre. Um den damit im Hinblick auf die gewünschte durchgängige Aufrechterhaltung der Sterilität einhergehenden Anforderungen auf besonders weitgehende Weise gerecht zu werden, ist der Medikamentenbehälter 1 mit einem die Behälteröffnung 6 verschließenden Verschlusssystem 10 ausgerüstet, mit dem einerseits gerade bei der Befüllung das Risiko eines Eintrags unerwünschter Verunreinigungen besonders gering gehalten werden kann, wobei andererseits selbst bei besonders wirksamem Manipulationsschutz auch eine Nachverfolgbarkeit auch einzelner mit dem Wirkstoff befüllter Behältnisse möglichst über die gesamte Logistikkette ermöglicht sein soll. Dies sollte für eine besonders weitgehende Verbesserung bereits bei oder unmittelbar nach der Befüllung erfolgen, um die Nachverfolgung oder ein so genanntes "Tracking" möglichst lückenlos zu ermöglichen.

Das Verschlusssystem 10 umfasst als wesentliche Komponente einen Verschlussdeckel 12 mit einem Grundkörper 14. Dieser ist gemäß einem Aspekt der Erfindung und zur Ermöglichung des gewünschten Trackings oder der individualisierten Nachverfolgung mit einer für den Behälter 1 individuell charakteristischen Kennung versehen. Diese ist im Ausführungsbeispiel durch einen integrierten RFID-Transponder 15 realisiert; es wären aber auch andere Kennzeichnungskonzepte wie beispielsweise die Nutzung von Bar-Codes denkbar. Der Grundkörper 14 ist im Ausführungsbeispiel aus einem vergleichsweise harten und robusten Kunststoff, nämlich aus Polypropylen (PP), als Spritzling oder Spritzgusskörper ausgeführt. Gemäß einem als eigenständig erfinderisch angesehenen Aspekt ist der RFID-Transponder 15 dabei vollständig in den Grundkörper 14 integriert, insbesondere vollständig umspritzt. Damit ist eine vollständig gekapselte Ausführung erreichbar, so dass die damit erreichbare Kennzeichnung manipulationssicher, zuverlässig und - aufgrund der ansonsten nicht veränderten äußeren Kontur des Verschlussdeckels 12 - problemlos in existierende Prozess- oder Abfüllabläufe integrierbar und mit diesen kompatibel ist. Damit ist der solchermaßen mit einer digital auslesbaren Kennzeichnung versehene Verschlussdeckel 12 auch - selbst im Hinblick auf die damit verbundenen erhöhten Anforderungen - als Primärpackmittel nutzbar.

Gemäß einem Aspekt der Erfindung dient der RFID-Transponder 15, der auch als "RFID-Tag" oder "Funketikett" bezeichnet werden kann, somit als Informationselement, in dem ein für die eindeutige Identifizierung des RFID-Chips geeigneter Signatur-Kennwert hinterlegt ist. Zusätzlich können, je nach Bauart des RFID-Chips 15, auch weitere wichtige, für den Behälterinhalt charakteristische Informationen hinterlegt und für eine spätere Nutzung bereitgestellt werden. Gemäß einem Aspekt der Erfindung ist im RFID-Transponder 15 des Behälters 1 somit insbesondere eine individuelle, für den individuellen Behälter 1 charakteristische Kennung hinterlegt. Der solchermaßen ausgelegte RFID-Transponder 15 ist später per Funk und somit kontaktlos auslesbar, was die Handhabung und Logistik gerade bei abgefüllten Wirkstoffen oder Arzneimitteln und den damit einhergehenden möglicherweise enormen Stückzahlen enorm erleichtert. Damit kann ein solchermaßen ausgerüsteter Medikamentenbehälter 1 und der darin befindliche Wirkstoff auf besonders einfache Weise nachverfolgt ("getrackt") und geeignet überwacht werden, wobei dies auch vollständig automatisiert erfolgen kann. Insbesondere kann auch ein dem RFID-Chip 15 zugeordneter Signatur-Kennwert mit anderen Daten, beispielsweise betreffend den Behälter 1 selbst oder den in diesem vorgehaltenen Inhalt, verknüpft und als gemeinsamer Datensatz für eine spätere Weiterverarbeitung bereitgestellt werden.

Gemäß einem Aspekt der Erfindung umfasst der RFID-Transponder 15 einen RFID-Chip und eine mit diesem verbundene RFID-Antenne, die beispielsweise gedruckt sein kann.

Zur Bildung eines Originalitätsverschlusses 18 ist am Grundkörper 14 zudem von diesem abreißbar eine Siegelplatte 20 angebracht. Für einen Zugriff auf das Innere des Medikamentenbehälters 1, also für eine Entnahme von Wirkstoff, muss somit zunächst die Siegelplatte 20 entfernt werden, bevor zur eigentlichen Wirkstoffentnahme ein entsprechendes Nadelsystem durch eine darunter liegende Siegelmembran hindurchgestochen werden kann. Gerade die Kombination dieser Komponenten mit dem in den Grundkörper 14 integrierten RFID-Transponder 15 wird als eigenständig erfinderisch angesehen, da hierbei eine zuverlässige, für eine lückenlose Nachverfolgung des individuellen Behälters 1 geeignete Kennzeichnung auch für ein System bereitgestellt werden kann, das auch ansonsten höchsten Anforderungen hinsichtlich Dichtigkeit, Sterilität und allgemein der Eignung als Primärpackmittel genügt.

Zur Durchführung der Befüllung des Medikamentenbehälters 1 mit Wirkstoff ist ein Befüllungssystem 30 vorgesehen, wie es in Fig. 2 schematisch gezeigt ist. Das Befüllungssystem 30 ist in der Art einer sequenziellen Anlage ausgelegt und umfasst eine Anzahl von Funktionsmodulen, die im Hinblick auf die vorgesehenen Bearbeitungsschritte geeignet funktionell hintereinandergeschaltet sind. Eingangsseitig ist dabei eine Eingangsstation 32 vorgesehen, an die die zu befüllenden Medikamentenbehälter 1 angeliefert werden. Die Anlieferung erfolgt dabei in der Regel in der Form größerer Chargen von beispielsweise 100 Behältern 1, die in der Eingangsstation 32 zunächst vereinzelt werden (so genanntes "De-Nesting").

Der Eingangsstation 32 ist eine als Elektronenstrahleinheit ("e-beam") ausgebildete Sterilisierungseinheit 34 nachgeschaltet. In dieser können die eingetroffenen Behälter 1 erneut sterilisiert werden, um eine ggf. während der Lagerung oder Verwahrung aufgetretene Kontamination sicher zu eliminieren.

Der Sterilisierungseinheit 34 ist prozessseitig eine Vorbereitungsstation 36 nachgeschaltet, in der die Behälter 1 zur Befüllung vorbereitet werden, beispielsweise durch vorübergehendes Entfernen und Zwischenlagern der jeweiligen Verschlussdeckel 12. Der Vorbereitungsstation 36 nachgeschaltet ist die eigentliche Einfüllstation 40 zur Befüllung des jeweiligen Medikamentenbehälters 1 mit Wirkstoff. Dieser schließt sich eine Fertigmontagestation 42 an, in der dem jeweiligen Medikamentenbehälter 1 der jeweilige Verschlussdeckel 12 wieder zugeordnet und wieder angebracht wird.

Das Befüllungssystem 30 ist gezielt für eine kompakte, effiziente Bauweise zur Erfüllung auch höchster Qualitätsstandards ausgelegt. Dazu sind die Sterilisationseinheit 34, die Vorbereitungsstation 36, die Einfüllstation 40 und die Fertigmontagestation 42 in einem gemeinsamen Außengehäuse 46 angeordnet.

Zur Prozessführung und Steuerung umfasst das Befüllungssystem 30 eine Steuereinheit 50, die datenseitig geeignet mit den vorstehend genannten Komponenten verbunden ist. Insbesondere steuert sie dabei innerhalb des Einfüllprozesses die Einfüllstation 40 unter Vorgabe der jeweils einfüllenden Produktmengen sowie unter Berücksichtigung sonstiger für die Befüllung relevanter Faktoren. Aus den nachfolgend erläuterten Gründen und auch im Hinblick auf die allgemeine Systemauslegung ist die Steuereinheit zudem über eine geeignete Datenverbindung mit dem durch die Wolke 52 symbolisierten Internet verbunden.

Unter anderem ist die Steuereinheit 50 dabei gemäß einem Aspekt der Erfindung für die Durchführung des so genannten Konzepts einer "patientenindividuellen Abfüllung" oder "situationsbedingten Abfüllung" ausgelegt und vorgesehen. Dabei wird von einer externen Quelle, beispielsweise dem behandelnden Arzt oder einem Krankenhaus, eine für die individuelle Behandlung eines Patienten aktuell vorgesehene Dosis eines bestimmten Medikaments oder Wirkstoffs vorgegeben und in einem Anforderungs-Datensatz hinterlegt. Ein solcher Anforderungs-Datensatz kann, beispielsweise über das Internet 52, an die mit diesem geeignet verbundene Steuereinheit 50 übermittelt werden.

Auf der Grundlage dieses Anforderungs-Datensatzes erzeugt die Steuereinheit 50 entsprechende Steuersignale für die genannten Komponenten, so dass die Abfüllung der individuell für den jeweiligen Patienten vorgesehenen Medikamenten- oder Wirkstoffmenge anhand der Anforderung durchgeführt wird. Insbesondere wird dabei die Einfüllmenge derjenigen Dosis vorgegeben, die für die dem Anforderungs-Datensatz zugrundeliegende Behandlung vorgesehen ist. Einhergehend damit wird der der Kennung, also vorliegend gemäß einem Aspekt der Erfindung dem RFID-Chip 15, des hierfür verwendeten Medikamentenbehälters 1 zugeordnete Signatur-Kennwert erfasst und in der Steuereinheit 50 mit dem Anforderungs-Datensatz verknüpft. Damit ist für eine Auswerteeinheit später anhand der ausgelesenen Signatur des RFID-Chips und durch Abgleich mit dem damit verknüpften Anforderungs-Datensatz feststellbar, für welchen individuellen Anwendungs- oder Behandlungsfall der individuelle Behälter 1 befüllt wurde. Anschließend kann der somit individuell und bedarfsgerecht befüllte Behälter 1 an den Besteller, beispielsweise den Behandler, übermittelt werden, wobei der zugeordnete RFID-Chip 15 jederzeit ein Tracking oder eine Nachverfolgung des jeweiligen Behälters 1 bis hin zum Bestimmungsort, und ggf. jederzeit eine Verifikation, ob es sich um den richtigen Behälter 1 handelt, erlaubt.

Parallel dazu wird, vorliegend ebenfalls über das Internet 52, aber natürlich denkbar auch über jede andere geeignete Kommunikationsstruktur, der mit dem Signatur-Kennwert verknüpfte Anforderungs-Datensatz ebenfalls an den Besteller zurückübermittelt. Dieser ist nunmehr in der Lage, anhand der Kennzeichnung des Behälters 1 festzustellen, für welche Behandlung dessen Inhalt und Dosierung abgefüllt wurde.

Analog dazu ist die Steuereinheit 50 dabei gemäß einem weiteren, als eigenständig erfinderisch angesehenen Aspekt der Erfindung für die Durchführung des so genannten Konzepts einer "lokalen Etikettierung" oder "Vor-Ort-Etikettierung", alternativ auch als "local labelling and packaging" bezeichnet, ausgelegt. Dabei kann gemäß einem Aspekt am Installationsort des Befüllungssystems 30 die zentrale Herstellung des Wirkstoffs oder Medikaments in großen Mengen ("bulk Herstellung") sowie die zentrale Abfüllung in individualisierte Behälter oder Container sowie deren zentrale Lagerung einer Vielzahl solcher abgefüllter Behälter ("bulk storage") erfolgen kann. Von dort aus können dann auch große Mengen solcher befüllten Behälter 1 zu dezentral aufgestellten Konfektionierungs- oder Weiterverarbeitungsstationen 56 transportiert werden, die bei einer globalisierten Infrastruktur insbesondere in anderen Ländern, beispielsweise den Anwenderländern, vorgesehen sein können. Die Anbringung der Labels oder Etiketten kann dabei gemäß einem Aspekt der Erfindung, insbesondere in Erfüllung eventueller nationaler Vorgaben und Kennzeichnungspflichten, erst dort am Aufstellungsort der jeweiligen Konfektionierungsstation 56 vorgesehen sein. Die ordnungsgemäße und korrekte Inhaltsangabe des jeweils etikettierten Behälters 1 erfolgt dabei zweckmäßigerweise anhand des dem Behälter individuell zugeordneten Signatur-Kennwerts und der mit diesem verknüpften, für die Befüllung des Medikamentenbehälters charakteristischen Kenndaten.

In vorteilhafter Weiterbildung umfassen die Kenndaten dabei die für die genannten Zwecke förderlichen oder erforderlichen Angaben wie beispielsweise Inhaltsstoff, Füllmenge, Abfülldatum, Chargennummer, Hersteller, Abfüller und dergleichen. Die entsprechenden Datensätze können dabei, beispielsweise über das Internet 52, an die Konfektionierungs- oder Weiterverarbeitungsstation übermittelt werden.

### Bezugszeichenliste

- 1: Medikamentenbehälter
- 2: Behälterwand
- 4: Innenraum
- 6: Behälteröffnung
- 10: Verschlusssystem
- 12: Verschlussdeckel
- 14: Grundkörper
- 15: RFID-Transponder
- 18: Originalitätsverschluss
- 20: Siegelplatte
- 30: Befüllungssystem
- 32: Eingangsstation
- 34: Sterilisierungseinheit
- 36: Vorbereitungsstation
- 40: Einfüllstation
- 42: Fertigmontagestation
- 50: Steuereinheit
- 52: Wolke
- 56: Konfektionierungsstation

## Patentansprüche

1. Verfahren zum Befüllen eines Medikamentenbehälters (1) mit einem Wirkstoff, bei dem die in den Medikamentenbehälter (1) abzufüllende Wirkstoffmenge abhängig von einem in einem zugeordneten Anforderungs-Datensatz hinterlegten Kennwert eingestellt wird, wobei vor, während oder nach der Abfüllung ein dem Medikamentenbehälter (1) individuell zugeordneter Signatur-Kennwert mit dem Anforderungs-Datensatz verknüpft wird.

2. Verfahren nach Anspruch 1, bei dem der Medikamentenbehälter (1) mit einem RFID-Chip (15) versehen ist, wobei der dem RFID-Chip (15) individuell zugeordnete Signatur-Kennwert mit dem Anforderungs-Datensatz verknüpft wird.

3. Verfahren zum Bereitstellen eines verkaufsfertigen, mit einem Wirkstoff befüllten Medikamentenbehälters (1), bei dem bei der Befüllung des Medikamentenbehälters (1) ein diesem zugeordneter Kennzeichnungs-Datensatz erstellt wird, in dem ein dem Medikamentenbehälter (1) individuell zugeordneter Signatur-Kennwert mit für die Befüllung des Medikamentenbehälters (1) charakteristischen Kenndaten verknüpft ist, wobei der Medikamentenbehälter (1) nach seiner Befüllung zunächst zu einer Konfektionierstation transportiert und erst dort anhand des individuell zugeordneten Signatur-Kennwerts und der mit diesem verknüpften, für die Befüllung des Medikamentenbehälters (1) charakteristischen Kenndaten mit einer Etikettierung und/oder einer Umverpackung versehen wird.

4. Verfahren nach Anspruch 3, bei dem der Medikamentenbehälter (1) mit einem RFID-Chip (15) versehen ist, wobei der dem RFID-Chip (15) individuell zugeordnete Signatur-Kennwert mit den für die Befüllung des Medikamentenbehälters (1) charakteristischen Kenndaten verknüpft wird
